# EUROPÄISCHE PATENTSCHRIFT

(11) **EP 3 753 407 B1**
(45) Veröffentlichungstag und Bekanntmachung des Hinweises auf die Patenterteilung: **14.08.2024**
(21) Anmeldenummer: 20401029.2
(22) Anmeldetag: 19.05.2020
(51) Int. Cl.: A01M 7/00

(54) **LANDWIRTSCHAFTLICHES GERÄT MIT VERBESSERTER NEIGUNGSREGELUNG**
AGRICULTURAL IMPLEMENT WITH IMPROVED INCLINATION CONTROL
APPAREIL AGRICOLE À RÉGLAGE DE L'INCLINAISON AMÉLIORÉ

(30) Priorität: 27.05.2019 DE 102019114084
(43) Veröffentlichungstag der Anmeldung: 23.12.2020
(73) Patentinhaber: Amazonen-Werke H. Dreyer SE & Co. KG, 49205 Hasbergen (DE)
(72) Erfinder: große Prues, Frank, 49593 Bersenbrück (DE)

(56) Entgegenhaltungen:
- EP-A1- 3 440 932
- DE-A1- 102015 101 032
- DE-A1- 102017 104 814

## Beschreibung

Die Erfindung betrifft ein landwirtschaftliches Gerät. Ferner betrifft die Erfindung ein Verfahren zur Steuerung und/oder Regelung eines landwirtschaftlichen Geräts.

Es sind vielfältige landwirtschaftliche Geräte zum Ausbringen von Material, wie Düngemittel, Pflanzenschutzmittel oder Saatgut bekannt, beispielsweise Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 40 m aufweisen. Dabei soll im Betrieb der Abstand zwischen dem Verteilergestänge und dem Boden über die gesamte Arbeitsbreite des Verteilergestänges möglichst konstant bleiben. Das bedeutet, dass das Verteilergestänge, auch bei Unebenheiten im zu bearbeitenden Boden, möglichst parallel zum zu bearbeitenden Boden gehalten wird.

Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Kontakt mit dem Boden und/oder Pflanzenbestand kommen und beschädigt werden. Zusätzlich ist die homogene Verteilung des auszubringenden Materials, aufgrund der geneigten Stellung des Verteilergestänges zum Boden, und damit eines größeren oder kleineren Abstandes zwischen dem Boden und einzelnen Düsen, nicht mehr gegeben.

Um diese Neigung und unerwünschte Bewegungen um die Fahrzeuglängsachse auszugleichen, sind Vorrichtungen bekannt, die über eine Pendelaufhängung und über Neigungssensoren oder Abstandssensoren verfügen und welche über Stelleinrichtungen den konstanten Abstand zum Boden einzustellen versuchen.

Die Neigungsverstellung der Ausleger des Verteilergestänges erfolgt häufig durch Hydraulikzylinder und Feder-Dämpfersystemen, die mit dem jeweiligen Ausleger verbunden sind. Beispielhaft wird auf FR 2 795 913 A1, EP 1 167 095 A1 und EP 0 922 385 A1 verwiesen. Als Messgrößen gehen bei den bekannten Regelungen der Abstand zwischen dem Ausleger und dem Boden und/oder der Relativwinkel zwischen dem Ausleger und dem Schlepper ein. Die bekannten Regelungen haben den Nachteil, dass diese ungenau sind und eine Echtzeitregelung nicht erlauben.

Deshalb weist die Feldspritze gemäß EP 1 444 894 A1 eine mehrgliedrige Aufhängung auf, bei der sowohl die Signale aus der Abstandsmessung zwischen Ausleger und Boden als auch Neigungssignale, die die Relativneigung zwischen dem Fahrzeug und dem Ausleger wiedergeben, in die Regelung eingehen. Der Ausleger ist an einem höhenverstellbaren Hubrahmen um eine in Fahrtrichtung weisende Drehachse drehbar gelagert. Ein drehbarer Zwischenrahmen ist koaxial zum Ausleger am Hubrahmen angebracht. Der Zwischenrahmen und der Ausleger sind durch zwei Zentrierfedern und einen Dämpfer miteinander gekoppelt. Zwischen dem Zwischenrahmen und dem Hubrahmen ist ein Hydraulikzylinder vorgesehen.

Zur Neigungsverstellung wird der Hydraulikzylinder ein- oder ausgefahren und verdreht den Zwischenrahmen gegenüber dem Hubrahmen. Dadurch wird eine der beiden Zentrierfedern gelängt und die andere verkürzt. Die auf den Ausleger wirkende Federkraft zieht den Ausleger entsprechend der Bewegung des Zwischenrahmens nach, so dass dieser - bezogen auf den Zwischenrahmen - in der geneigten Endposition wieder zentriert ist. Die Zentrierfedern kompensieren überdies schnelle Relativbewegungen zwischen Fahrzeug und Ausleger, so dass der Ausleger im Betrieb lagestabil bleibt.

In die Neigungsregelung gehen einerseits die Signale aus der Bodenabstandsmessung zwischen dem Ausleger und dem Boden und andererseits ein Neigungssignal ein, das ein Maß für die auf den Ausleger wirkende Federkraft bildet. Damit kann der Hydraulikzylinder präzise angesteuert werden. Ein Übersteuern des Auslegers wird weitgehend vermieden.

Allerdings ist diese Neigungsregelung langsam. Außerdem ist der Aufbau mit dem Zwischenrahmen und den zwischen den Zwischenrahmen und den Ausleger geschalteten Federn aufwändig.

Eine Anpassung der Dämpfung zur Reduktion unerwünschter Bewegungen in oder entgegen der Fahrtrichtung offenbart DE 10 2017 104 814 A1.

Die Aufgabe der vorliegenden Erfindung ist es daher, ein landwirtschaftliches Gerät mit verbesserter Neigungsregelung zur Verfügung zu stellen. Eine weitere Aufgabe der Erfindung ist es, ein Verfahren zur Steuerung eines landwirtschaftlichen Geräts zur Verfügung zu stellen.

Diese Aufgaben werden gelöst durch ein landwirtschaftliches Gerät gemäß Anspruch 1 und ein Verfahren nach Anspruch 11. Bevorzugte Ausführungsformen sind in den abhängigen Ansprüchen beschrieben.

Das landwirtschaftliche Gerät kann insbesondere eine Feldspritze sein. Die Feldspritze kann selbstfahrend sein. Sie kann auch eine gezogene oder getragene Feldspritze sein. Durch die hydraulische Verbindungsleitung wird eine direkte Kopplung der beiden hydraulischen Stellelemente erreicht. Mit anderen Worten kann eine Kraft, die an eines der beiden Stellelemente angelegt wird, auf das andere Stellelement übertragen werden. Dadurch, dass sowohl jeder der Stelleinrichtungen als auch der Verbindungsleitung je ein Druckregelventil zugeordnet ist, wird eine flexible Neigungssteuerung des Verteilergestänges ermöglicht. So erlaubt das System alleine aufgrund der entsprechenden Ansteuerung der Druckregel- und Sperrventile sowohl ein gemeinsames An- und Abwinkeln der beiden Ausleger, ein selektives An- und Abwinkeln nur eines Auslegers, sowie ein Verkippen des gesamten Verteilergestänges.

Hier um im Folgenden ist unter dem An- und Abwinkeln eines Auslegers eine Drehbewegung des Auslegers um die jeweilige Drehachse zu verstehen. Mit anderen Worten bewirkt ein An- bzw. Abwinkeln eine Änderung des Winkels des jeweiligen Auslegers gegenüber der Horizontalen. Dabei bewegt sich der jeweilige Ausleger beim Anwinkeln vom Boden weg und zum Mittelteil des landwirtschaftlichen Geräts hin, beim Abwinkeln zum Boden hin. Ein Verkippen des Verteilergestänges bezeichnet dementsprechend ein Anwinkeln eines Auslegers bei entsprechenden Abwinkeln des anderen Auslegers.

Neigungsänderungen am Verteilergestänge können bei dem erfindungsgemäßen landwirtschaftlichen Gerät also, anders als bei den oben beschriebenen bekannten landwirtschaftlichen Geräten, über die direkte Kontrolle der Ausleger erreicht werden. Damit kann auf einen zusätzlichen Zwischenrahmen mit einem Hydraulikzylinder verzichtet werden.

Beispielsweise kann ein synchrones An- oder Abwinkeln der beiden Ausleger folgendermaßen erreicht werden: Die den jeweiligen Stellvorrichtungen zugeordneten Druckregelventile werden angesteuert, um einen Druck an den Stellvorrichtungen zu erzeugen, der in einem An- bzw. Abwinkeln des Auslegers resultiert. Durch die Bewegung der Stellvorrichtungen wird ein entsprechender Druck auf die Flüssigkeit in der hydraulischen Verbindungsleitung übertragen. Je nach Druckänderung kann Flüssigkeit aus der hydraulischen Verbindungsleitung ab- oder in die hydraulische Verbindungsleitung nachströmen.

Ein selektives An- und Abwinkeln nur eines Auslegers kann analog erreicht werden. In diesem Fall wird das Druckregelventil des betreffenden Auslegers angesteuert, um die entsprechende Stellvorrichtung mit einem Druck zu versorgen, der zu einem An- bzw. Abwinkeln des betreffenden Auslegers führt. Durch die Bewegung der Stellvorrichtung wird wiederum ein entsprechender Druck auf die Flüssigkeit in der hydraulischen Verbindungsleitung übertragen. Je nach Druckänderung kann Flüssigkeit aus der hydraulischen Verbindungsleitung ab- oder in die hydraulische Verbindungsleitung nachströmen. Die jeweils andere Stellvorrichtung, und damit der jeweils andere Ausleger, werden nicht beeinflusst, da jede Druckübertragung auf die hydraulische Verbindungsleitung durch das Abfließen der Flüssigkeit aus der Verbindungsleitung kompensiert wird. Weiterhin kann das Druckregelventil der jeweils anderen Stellvorrichtung angesteuert werden, um den anliegenden Druck aufrechtzuerhalten. Damit wird der jeweils andere Ausleger in seiner momentanen Lage gehalten.

Auf der anderen Seite ist es mit dem System auch möglich, das gesamte Verteilergestänge zu verkippen. Hierzu wird das Druckregelventil eines der Ausleger angesteuert, um die entsprechende Stellvorrichtung mit einem Druck zu versorgen, der zu einem An- oder Abwinkeln dieses Auslegers führt. Weiterhin wird das Druckregelventil des jeweils anderen Auslegers angesteuert, um die entsprechende Stellvorrichtung mit einem Druck zu versorgen, der jeweils zu einem Ab- oder Anwinkeln dieses Auslegers führt. Das Druckregelventil der hydraulischen Verbindungsleitung kann angesteuert werden, um den dort anliegenden Druck aufrechtzuerhalten. Somit kommunizieren die Stellvorrichtungen hydraulisch, was zu einer gleichmäßigen gemeinsamen Drehbewegung der beiden Ausleger führt.

Weiterhin kann der ersten Stellvorrichtung, der zweiten Stellvorrichtung und der Verbindungsleitung jeweils ein dem jeweiligen Druckregelventil zugeordnetes Sperrventil zugeordnet sein. Mit einem solchen Sperrventil kann insbesondere das Abfließen von hydraulischer Flüssigkeit aus der jeweiligen Stellvorrichtung oder der Verbindungsleitung verhindert werden. Damit können die jeweiligen Ausleger in einer gewünschten Lage verriegelt werden. Dies kann beispielsweise bei Situationen wie dem Straßentransport oder beim Ein- und Ausklappen des Verteilergestänges, in denen das Verteilergestänge über die Stelleinrichtung starr mit dem landwirtschaftlichen Gerät verbunden sein soll, wünschenswert sein.

Die Sperrventile können auch während des weiter oben beschriebenen Vorgänge des An- oder Abwinkelns bzw. Verkippens verwendet werden.

So ist es möglich, dass während eines selektiven An- oder Abwinkelns für die jeweils anderen Stellvorrichtung alternativ oder zusätzlich zum Einstellen eines Drucks am Druckregelventil das zugeordnete Sperrventil geschlossen wird. Damit wird der entsprechende Ausleger verriegelt, und es wird sichergestellt, dass das An- oder Abwinkeln des einen Auslegers keinen Einfluss auf den jeweils anderen Ausleger hat.

Analog ist es beim gemeinsamen Verkippen möglich, das dem Druckregelventil der hydraulischen Verbindungsleitung zugeordnete Sperrventil zu schließen. Damit wird verhindert, dass hydraulische Flüssigkeit aus der Verbindungsleitung abfließen kann, und die hydraulische Kommunikation der Stellvorrichtungen ist gewährleistet.

Falls den Druckregelventilen Sperrventile zugeordnet sind, so können diese nach dem Beenden des An- oder Abwinkelns bzw. des Verkippens, geschlossen werden, um die Stellvorrichtungen in einem gewünschten Stellzustand zu verriegeln.

Den hydraulischen Vorrichtungen können weiterhin einer oder mehrere Drucksensoren zugeordnet sein. Die Drucksensoren können als Drucksensor zur direkten Druckmessung, insbesondere als Druckmessumformer, ausgebildet sein. Eine solche Ausbildung hat den Vorteil, dass hierdurch sowohl ein Relativdruck, als auch ein Absolutdruck ermittelt werden können. Weiterhin können die Drucksensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung kann wird elektronisch gemessen, als analoges oder digitales Ausgangssignal ausgegeben und beispielsweise an die Regeleinheit übermittelt werden.

Die jeweiligen Ausleger können mehrteilig ausgebildet sein. Sie können klappbare Segmente umfassen, die um eine senkrecht zur Fahrrichtung verlaufende Achse bewegt werden können. Die Ausleger können weiterhin segmentweise ein- und ausgeklappt werden. Dabei können sie auch Zwischenstellungen einnehmen. Damit ist es möglich, die Arbeitsbreite des landwirtschaftlichen Geräts anzupassen, indem eine bestimmte Anzahl von Segmenten ausgeklappt wird. Dies kann insbesondere für einen Ausleger unabhängig von dem anderen Ausleger geschehen. An zwischen den klappbaren Segmenten liegenden Gelenken können jeweils Sensoren, insbesondere Potentiometer, zur Ermittlung der Klappzustände angebracht sein. Diese Sensoren können sowohl vollständig eingeklappte / ausgeklappte Segmente als auch Zwischenstellungen an den Gelenken zwischen benachbarten Segmenten feststellen sowie den jeweiligen Klappzustand an die Regeleinheit übermitteln.

Die hydraulischen Stelleinrichtungen sowie die hydraulische Verbindungsleitung können über die Druckregelventile und die zugeordneten Sperrventile mit einem Hydraulikkreislauf verbunden sein. Der Hydraulikkreislauf kann ein offener Kreislauf sein, der beispielsweise eine Pumpe und einen Hydrauliktank umfasst.

Die Regeleinheit kann so konfiguriert sein, dass die Druckregelventile beim Öffnen der Sperrventile an einen zugehörigen Start-Solldruck angepasst sind. Ein solcher Start-Solldruck kann beispielsweise in einem der Regeleinheit zugeordneten Speicher abgelegt sein. Insbesondere ist es möglich, eine Vielzahl von Start-Solldruckwerten vorzusehen, wobei jeweils einem Klappzustand eines Auslegers ein Start-Solldruckwert zugeordnet ist. Da es beim Öffnen der Sperrventile prinzipiell zu unkontrollierten Bewegungen des Verteilergestänges kommen kann, kann die Regelung der Neigungseinstellung beim Öffnen der Sperrventile möglichst genau ausgehend von einem zugeordneten Start-Solldruckwert erfolgen. Dieser wird vorzugsweise bereits unmittelbar vor dem Öffnen eingestellt und während des Öffnens beibehalten. Auf diese Weise kann unkontrollierten Bewegungen des Verteilergestänges besonders schnell und effizient entgegengewirkt werden.

Die Druckregelventile können zum Einhalten eines verbraucherseitigen Drucks in Abhängigkeit von einem elektrischen Steuersignal, insbesondere Steuerstrom, ausgebildet sein.

Das Druckregelventil ist dann beispielsweise ein direktgesteuertes und federbelastetes Dreiwegeventil beispielsweise in Schieberbauart. Im stromlosen Zustand bzw. ohne Steuersignal wird der Druck am Verbraucher zum Tank entlastet. Bei maximalem Steuersignal wird der maximal mögliche Druck (entweder der Druckversorgung oder der maximale Wert des Druckregelventils) auf den Verbraucher eingeregelt.

Bei Anlegen eines Steuersignals wird der Federbelastung im Ventil elektromagnetisch entgegengewirkt und der Druck auf der Verbraucherseite dadurch entsprechend der Steuerkennlinie des Ventils konstant gehalten. Beispielsweise ist der eingestellte Druck dann proportional zum Steuersignal, das insbesondere ein Steuerstrom ist. Eine solche proportionale Steuerkennlinie ist jedoch nicht zwingend erforderlich und kann beispielsweise aus Kostengründen durch eine nichtproportionale Ansteuerung ersetzt werden. Hierfür können beliebige Steuerkennlinien in der Regeleinheit abgelegt sein, um Steuersignale passend zu einzelnen Solldruckwerten zu berechnen und auszugeben.

Die Ventile können insbesondere einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch die Stelleinrichtung aktiviert werden kann. Dies geschieht solange, bis der anliegende Druck dem Solldruck gemäß elektrischem Signal entspricht.

Generell beruht die Funktionsweise von Proportionaldruckregelventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionaldruckregelventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit.

Die Druckregelventile können anhand einer bekannten Kennlinie elektronisch gesteuert auf einen Sollwert einstellbar sein. Die Kennlinien beschreiben beispielsweise den Zusammenhang zwischen einem auftretenden Druck und dem zugehörigen benötigten elektrischen Strom an einer Steuerspule des Ventils. Beispielhaft kann über die oben beschriebenen Drucksensoren ein einzustellender Sollwert der Druckregelventile ermittelt werden, wodurch anhand der Kennlinie ein Steuerstrom auf die Ventile geschaltet wird, um den entsprechenden Druck einzustellen. Dies hat den Vorteil, dass über die Kennlinie der Druckregelventile der Druck auf das Verteilergestänge präzise an einen Sollwert angepasst werden kann. Ein solcher Sollwert kann auch einem der oben erwähnten Start-Solldruckwerten entsprechen.

Das landwirtschaftliche Gerät kann weiterhin eine einem Ausleger zugeordnete Sensorvorrichtung zum Erfassen einer auf den jeweiligen Ausleger wirkenden Vertikalbeschleunigung des jeweiligen Auslegers umfassen. Eine solche Vertikalbeschleunigung kann beispielsweise auftreten, wenn das landwirtschaftliche Gerät über ein Hindernis, beispielsweise eine Bodenunebenheit, fährt. Die Messung der Vertikalbeschleunigung erlaubt es, die aufgrund einer solchen Vertikalbeschleunigung an dem Ausleger angreifenden Kräfte zu bestimmen. Aus diesen kann wiederum auf die Kräfte, die auf eine dem jeweiligen Ausleger zugeordnete hydraulische Stellvorrichtung wirken, rückgeschlossen werden. Damit kann der Druck bestimmt werden, der als Reaktion auf diese Kräfte, insbesondere zur Kompensation dieser Kräfte, an dem Druckregelventil eingestellt werden soll.

Die Sensorvorrichtung kann beispielswese einen Beschleunigungssensor zur Erfassung der Vertikalbeschleunigungen umfassen. Sie kann weiterhin einen Drehratensensor umfassen. Der Beschleunigungssensor und der Drehratensensor können separate Sensoren sein. Alternativ kann es sich um einen kombinierten Drehraten- und Beschleunigungssensor handeln. Der Beschleunigungssensor kann auf dem landwirtschaftlichen Gerät angebracht sein. Alternativ oder zusätzlich kann sich ein kombinierter Drehraten- und Beschleunigungssensor an dem jeweiligen Ausleger befinden. Insbesondere kann der Beschleunigungssensor nahe der jeweiligen Drehachse des Auslegers befestigt sein, wobei nahe hier meint, dass der Abstand des Sensors zur Drehachse kleiner 0,5 m, insbesondere kleiner 0,1 m ist. Bei einer solchen Konfiguration erfasst der Sensor nahezu keine Beschleunigungen, die aus einer Drehbewegung des Auslegers resultieren. Diese Messwerte können verwendet werden, um, wie weiter oben beschrieben, den Druck zu bestimmen, der an den Druckregelventilen eingestellt werden soll, um Kräfte auf die Ausleger, die beispielsweise beim Überfahren eines Hindernisses auftreten, zu kompensieren. Vorteilhafterweise werden hierfür so genannte inertiale Messeinheiten (IMU = Inertial Measuring Unit) verwendet. Solche Sensoren sind relativ kostengünstig.

Anderseits kann es vorteilhaft sein, die tatsächlich am Ausleger wirkende Beschleunigung zu bestimmen. Diese setzt sich zusammen aus der "externen" Vertikalbeschleunigung, die beispielsweise aufgrund des Überfahrens einer Bodenunebenheit auf das Gerät wirkt, der Beschleunigung, die aufgrund von Schwingungen des Auslegers auftritt, und der Beschleunigung, die aus der darauffolgenden Regelung resultiert. Für diesen Fall kann der Beschleunigungssensor am Ausleger mit einem festgelegten Abstand von der jeweiligen Drehachse angebracht sein. Dabei ist mit dem Abstand zur Drehachse der Normalabstand des Befestigungspunktes zur Drehachse gemeint. Insbesondere kann der Abstand zwischen 1 m und 3 m betragen, insbesondere zwischen 1 m und 2 m. Eine solche Anordnung des Sensors erlaubt es, sowohl die Vertikalbeschleunigung des Auslegers und, da der Abstand zwischen Drehpunkt und Sensor bekannt ist, auch die Rotationsbeschleunigung des Auslegers zu ermitteln. Dies ist vorteilhaft, da damit ein geschlossener Regelkreis für die auf den Ausleger wirkende Beschleunigung realisiert werden kann. Die Soll-Beschleunigung für einen solchen Regelkreis kann insbesondere 0 m/s² oder Erdbeschleunigung, also 9,81 m/s² betragen. Auch hier können IMUs verwendet werden.

Es ist weiterhin möglich, die eben beschriebenen Anordnungen zu kombinieren, d.h., einen ersten Beschleunigungssensor in der Nähe der Drehachse vorzusehen, und einen zweiten Beschleunigungssensor am Ausleger mit einem Abstand zur jeweiligen Drehachse anzubringen. Damit ist es möglich, durch Verarbeitung der Sensorwerte beider Sensoren die reine Rotationsbeschleunigung des Auslegers zu bestimmen. Dies kann beispielsweise über eine Differenzbildung der Sensorwerte geschehen. Durch eine solche Kombination kann erreicht werden, dass sowohl Kräfte, die aufgrund einer Vertikalbewegung des landwirtschaftlichen Geräts auftreten, als auch Kräfte, die aufgrund einer Drehbewegung eines Auslegers auftreten, präzise bestimmt werden können. Damit ist es auch möglich, auf diese Kräfte zu reagieren, insbesondere durch entsprechende Ansteuerung der jeweiligen Druckregelventile.

Zusätzlich zu den beschriebenen Sensoren kann die Sensorvorrichtung einen oder mehrere zusätzliche Sensoren umfassen. Beispielsweise kann die Sensorvorrichtung weitere Sensoren zur Messung eines Abstandes des Auslegers vom Boden umfassen. Solche Sensoren können beispielsweise als Ultraschallabstandssensoren ausgebildet sein. Zusätzlich oder alternativ kann die Sensorvorrichtung Sensoren zur Bestimmung einer Drehrate des Auslegers zu bestimmen. Zusätzlich oder alternativ kann die Sensorvorrichtung weitere Sensoren am Verteilergestänge umfassen, die dazu konfiguriert sind, eine Rotation um eine Klappachse und/oder eine Position eines Gestängeabschnitts und/oder Auslegers zu bestimmen. Diese Sensoren können beispielsweise als Potentiometer ausgebildet sein. Das Potentiometer ermittelt hierbei, ob ein einzelner Gestängeabschnitt oder auch der gesamte Ausleger aus seiner Sollage ausgelenkt wird und wie sich dessen Position, bzw. Lage verändert.

Die Regeleinheit kann dazu konfiguriert sein, die Druckregelventile basierend auf Werten der Sensorvorrichtung anzusteuern. Damit kann die Lage des jeweiligen Auslegers aufgrund der Messwerte gesteuert werden. Insbesondere können Abweichungen von einer Soll-Lage des Auslegers insbesondere während des Arbeitsvorgangs des Geräts korrigiert werden.

Dabei ermöglicht insbesondere die Kombination von verschiedenen Messwerten in der Datenverarbeitungseinheit eine sehr präzise Einstellung der Stellvorrichtungen beziehungsweise der Druckregelventile.

Die Regeleinheit kann weiterhin dazu konfiguriert sein, die Druckregelventile, insbesondere mittels eines PID-Reglers, so anzusteuern, dass ein Sollwert der Vertikalbeschleunigung an dem jeweiligen Ausleger wirkt. Insbesondere kann die Regeleinheit die Druckventile derart ansteuern, dass die auf den jeweiligen Ausleger wirkende Vertikalbeschleunigung auf 0 m/s² oder 9,81 m/s² geregelt wird. Dadurch kann die Kraftübertragung des Auslegers auf den Mittelteil des Geräts minimiert werden.

Die Regeleinheit kann dazu konfiguriert sein, die Messdaten der Sensorvorrichtung kontinuierlich in regelmäßigen Zeitabständen zu erfassen und zu verarbeiten. Die Zeitabstände können für alle Sensoren der Sensorvorrichtung gleich sein. Sie können aber auch für unterschiedliche Sensoren unterschiedlich sein. Die Zeitabstände liegen vorzugsweise zwischen 5ms bis 1s, vorzugsweise zwischen 5ms bis 100ms. Die Regeleinheit kann dazu konfiguriert sein, die Messdaten mittels eines Filters, beispielsweise eines PT1-Glieds, zu filtern. Durch die Wahl einer passenden Zeitkonstante kann hierbei beispielsweise ein Messrauschen unterdrückt werden.

Die erste und die zweite Stellvorrichtung können jeweils als Hydraulikzylinder, insbesondere als doppeltwirkender Hydraulikzylinder ausgebildet sein. Derartige Zylinder bilden kostengünstige und einfache Mittel zur Steuerung des Verteilergestänges. Die doppeltwirkenden Hydraulikzylinder können beispielsweise jeweils mit einem Kolben ausgebildet sein, welcher beidseitig mit Druck beaufschlagbar ist.

Hierbei kann die Verbindungsleitung die kolbenseitigen Kammern der ersten und der zweiten Stellvorrichtung verbinden. In diesem Fall sind die jeweiligen Druckregel- und Sperrventile der ersten und zweiten Stellvorrichtung den jeweiligen stangenseitigen Kammern zugeordnet. Das heißt, der Druck in den kolbenseitigen Kammern kann mittels des Drucks in der Verbindungsleitung gemeinsam für die erste und die zweite Stellvorrichtung eingestellt werden.

Die jeweiligen Druckregelventile können unabhängig voneinander ansteuerbar sein. Das bedeutet, dass die Druckregelventile jeweils unabhängig über ein elektronisches Signal von der Regeleinheit angesteuert werden können. Daher ist die Regelung effizient sowohl für symmetrische, als auch für asymmetrische Klappzustände des Verteilergestänges möglich. Bei asymmetrischen Klappzuständen mit asymmetrischer Arbeitsbreite herrschen aufgrund der unterschiedlichen Masseverteilung zwangsläufig unterschiedliche Druckverhältnisse an den beiden Druckregelventilen. Durch deren unabhängige Verstellbarkeit kann auch ein asymmetrisches Verteilergestänge zuverlässig in der gewünschten, insbesondere horizontalen Lage über dem Boden gehalten werden.

Die jeweiligen Stellvorrichtungen können weiterhin dazu geeignet sein, den jeweiligen Ausleger von einer Transportstellung in eine Arbeitsstellung und umgekehrt zu überführen. Hier ist unter einer Transportstellung eine Stellung des Auslegers zu verstehen, bei dem der Ausleger vollständig an das landwirtschaftliche Gerät angewinkelt ist. Durch die Verwendung derselben Stellvorrichtungen für die Neigungskontrolle und die Überführung von der Arbeits- und die Transportstellung und umgekehrt, wird eine einfache Steuerung des Verteilergestänges ermöglicht.

Die Erfindung stellt weiterhin ein Verfahren nach Anspruch 10 zur Steuerung eines landwirtschaftlichen Geräts zur Verfügung. Das landwirtschaftliche Gerät kann dabei eines oder mehrere der oben beschriebenen Merkmale aufweisen. Das Verfahren umfasst die folgenden Schritte:
- Einstellen eines ersten Solldrucks in der Verbindungsleitung mittels des zugeordneten Druckregelventils.
- Einstellen eines zweiten Solldrucks an der ersten Stellvorrichtung mittels des zugeordneten Druckregelventils.
- Einstellen eines dritten Solldrucks an der zweiten Stellvorrichtung zugeordneten Druckregelventils.

Dies ermöglicht die Einstellung eines beliebigen Klappzustandes des Verteilergestänges. Beispielsweise können die jeweiligen Solldrücke durch die Regeleinheit aufgrund eines jeweiligen Soll-Klappzustandes des jeweiligen Auslegers bestimmt werden. Nach Einstellung dieser Solldrücke werden die jeweiligen Ausleger in den jeweiligen Klappzustand überführt.

Bei dem Verfahren kann weiterhin ein der Verbindungsleitung zugeordnetes Sperrventil nach dem Einstellen des ersten Solldrucks geschlossen werden, das Einstellen des zweiten Solldrucks kann eine Erhöhung des Drucks an der ersten Stellvorrichtung umfassen, und das Einstellen des dritten Solldrucks kann eine entsprechende Senkung des Drucks an der zweiten Stellvorrichtung umfassen. Auf dieser Art und Weise kann erreicht werden, dass das gesamte Verteilergestänge um einen bestimmten Winkel verkippt wird, wie weiter oben beschrieben.

Alternativ kann ein der Verbindungsleitung zugeordnetes Sperrventil nach dem Einstellen des ersten Solldrucks geöffnet bleiben. Auf diese Art und Weise kann wie weiter oben beschrieben ein gleichzeitiges An- bzw. Abwinkeln der Ausleger erreicht werden.

Das Verfahren kann weiterhin die folgenden Schritte umfassen:
- Erfassen einer Vertikalbeschleunigung eines Auslegers.
- Bestimmen einer auf die jeweilige Stelleinrichtung aufgrund der erfassten Vertikalbeschleunigung wirkenden Kraft.
- Bestimmen von angepassten Druckwerten für die jeweilige Stelleinrichtung und/oder die Verbindungsleitung.
- Ansteuern der Regelventile zum Einstellen der bestimmten angepassten Druckwerte.

Somit kann die weiter oben beschriebene Kompensation von Beschleunigungen und damit eine Stabilisierung der jeweiligen Ausleger erreicht werden. Insbesondere wird der angepasste Druckwert derart bestimmt, dass er die auf die Stelleinrichtung wirkende Kraft möglichst kompensiert.

Das Verfahren kann weiterhin die Erfassung eines Abstandes des Auslegers vom Boden umfassen. Dies kann beispielsweise über Ultraschallabstandssensoren geschehen. Zusätzlich oder alternativ kann das Verfahren die Bestimmung einer Drehrate des Auslegers umfassen. Zusätzlich oder alternativ kann das Verfahren die Erfassung einer Rotation um eine Klappachse und/oder einer Position eines Gestängeabschnitts und/oder Auslegers umfassen. Dies kann beispielsweise mittels Potentiometern geschehen. Das Verfahren kann weiterhin die Ansteuerung der Regelventile aufgrund der Erfassung eines oder mehrerer der vorgenannten Messwerte umfassen. Insbesondere kann die Ansteuerung unter Verwendung von Sollwerten für einen oder mehrere der vorgenannten Messwerte durchgeführt werden. Mit anderen Worten kann das Verfahren eine Regelung auf diese Sollwerte hin umfassen. Dabei können die angepassten Druckwerte, insbesondere mittels einer PID-Schaltung, so bestimmt werden, dass an dem Ausleger ein Sollwert der Vertikalbeschleunigung wirkt.

Offenbart wird weiterhin ein landwirtschaftliches Gerät zum Ausbringen von Material, wie Düngemittel, Pflanzenschutzmittel oder Saatgut, umfassend ein beidseitig klappbares Verteilergestänge mit einem Mittelteil und zwei mit dem Mittelteil durch Gelenke verbundenen seitlichen Auslegern, eine erste hydraulische Stellvorrichtung, um einen der Ausleger um eine erste in Fahrtrichtung des landwirtschaftlichen Geräts weisende Drehachse zu bewegen, eine zweite hydraulische Stellvorrichtung, um den jeweils anderen Ausleger um eine zweite in Fahrtrichtung des landwirtschaftlichen Geräts weisende Drehachse zu bewegen, und eine Regeleinheit, wobei der ersten Stellvorrichtung zwei erste Druckregelventile zugeordnet sind, und der zweiten Stellvorrichtung zwei zweite Druckregelventile zugeordnet sind.

Dabei können den zwei ersten Druckregelventilen zwei erste Sperrventile zugeordnet sein, und den zweiten Druckregelventilen zwei zweite Sperrventile zugeordnet sind.

Insbesondere sind bei dieser Ausführungsform der Erfindung die Druckregelventile jeweils einer ersten Seite und einer zweiten Seite der jeweiligen Stellvorrichtung zugeordnet. Im Falle, dass es sich um doppeltwirkende Hydraulikzylinder handelt, ist jeweils ein Druckregelventil der kolbenseitigen, und ein Druckregelventil der stangenseitigen Kammer des jeweiligen Zylinders zugeordnet.

Eine solche Anordnung erlaubt ein komplett voneinander getrenntes An- bzw. Abwinkeln der beiden Ausleger. Durch entsprechende Ansteuerung der einzelnen Druckregelventile durch die Regeleinheit können ebenfalls die oben genannten Vorteile der Erfindung erzielt werden. Insbesondere kann die Regeleinheit die Druckregelventile und Sperrventile so ansteuern, dass ein gemeinsames Verkippen des gesamten Verteilergestänges, ein gemeinsamen An- oder Abwinkeln der beiden Ausleger, sowie ein unabhängiges An- oder Abwinkeln der jeweiligen Ausleger möglich ist.

Die Druckregelventile können hier so ausgebildet sein, wie weiter oben beschrieben. Die Stellvorrichtungen können ebenso wie weiter oben beschrieben ausgebildet sein. Die Ausleger können die weiter oben beschriebene segmentierte Form besitzen.

Weiterhin kann ein landwirtschaftliches Gerät nach dieser Ausführungsform ebenfalls die weiter oben beschriebenen Sensoren zum Erfassen einer Vertikalbeschleunigung eines jeweiligen Auslegers umfassen. Dementsprechend ist es auch möglich, die oben beschriebene Korrektur einer auftretenden Vertikalbeschleunigung bzw. die Regelung auf einen Sollwert der Beschleunigung mit dieser Ausführungsform durchzuführen.

Offenbart wird weiterhin ein Verfahren nach Anspruch 16 zur Steuerung eines landwirtschaftlichen Geräts. Das landwirtschaftliche Gerät kann dabei eines oder mehrere der oben beschriebenen Merkmale aufweisen. Das Verfahren umfasst die folgenden Schritte:
- Einstellen eines ersten Solldrucks an der ersten Stellvorrichtung mittels eines der zwei ersten Druckregelventile.
- Einstellen eines zweiten Solldrucks an der ersten Stellvorrichtung mittels des anderen der zwei ersten Druckregelventile.
- Einstellen eines dritten Solldrucks an der zweiten Stellvorrichtung mittels eines der zwei zweiten Druckregelventile.
- Einstellen eines vierten Solldrucks an der zweiten Stellvorrichtung mittels des anderen der zwei zweiten Druckregelventile.

Weitere Merkmale und Vorteile der Erfindung werden nachfolgend anhand der beispielhaften Figuren erläutert. Dabei zeigt:
- Figuren 1a bis 1c: schematisch die Heckansicht eines landwirtschaftlichen Geräts;
- Figur 2: schematisch einen Detailausschnitt eines landwirtschaftliches Geräts;
- Figur 3: schematisch einen Detailausschnitt eines landwirtschaftliches Geräts;
- Figuren 4a bis 4c: schematisch Heckansichten eines landwirtschaftlichen Geräts;
- Figuren 5a bis 5c: schematisch Heckansichten eines landwirtschaftlichen Geräts;
- Figuren 6a bis 6c: schematisch die Heckansicht eines landwirtschaftlichen Geräts; und
- Figur 7: schematisch einen Regelkreis für die Steuerung eines landwirtschaftlichen Geräts.

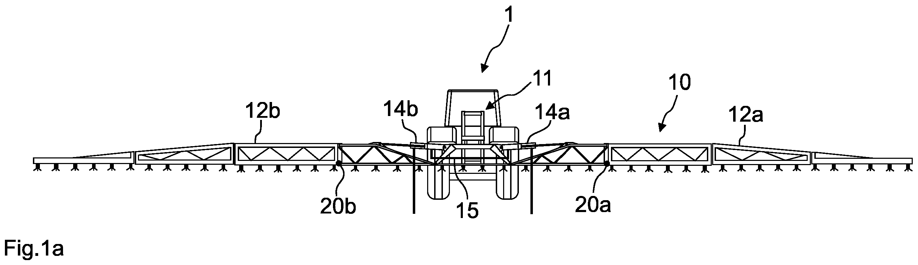

Figuren 1a bis 1c zeigen ein landwirtschaftliches Gerät 1, das als Feldspritze ausgebildet ist, in Heckansicht. Es ist zu erkennen, dass das Gerät 1 ein Verteilergestänge 10 mit einem Mittelteil 11 umfasst. Weiterhin besitzt das Verteilergestänge 10 zwei Ausleger 12 a,b, die mit dem Mittelteil 11 durch Gelenke verbunden sind. Jedem Ausleger 12 a,b ist eine Stellvorrichtung 14 a,b zugeordnet. Die Stellvorrichtungen 14 a,b sind im gezeigten Fall als doppeltwirkende Hydraulikzylinder ausgebildet. Die Stellvorrichtungen 14 a,b können den jeweiligen Ausleger 12 a,b um eine jeweilige Drehachse bewegen, wobei die jeweilige Drehachse parallel zu der Fahrtrichtung des landwirtschaftlichen Geräts ist 1. Im gezeigten Fall sind die Stellvorrichtungen 14 a,b so ausgelegt, dass sie den jeweiligen Ausleger 12 a,b von einer komplett an das Gerät 1 angewinkelten Stellung, die beispielsweise beim Straßentransport des Geräts 1 vorliegt, in eine vollständig horizontale Stellung, die beispielsweise bei der Feldarbeit vorliegt, und umgekehrt überführen können.

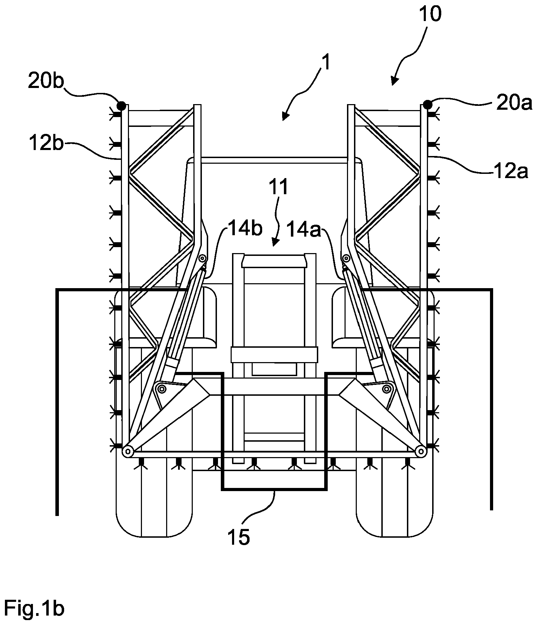

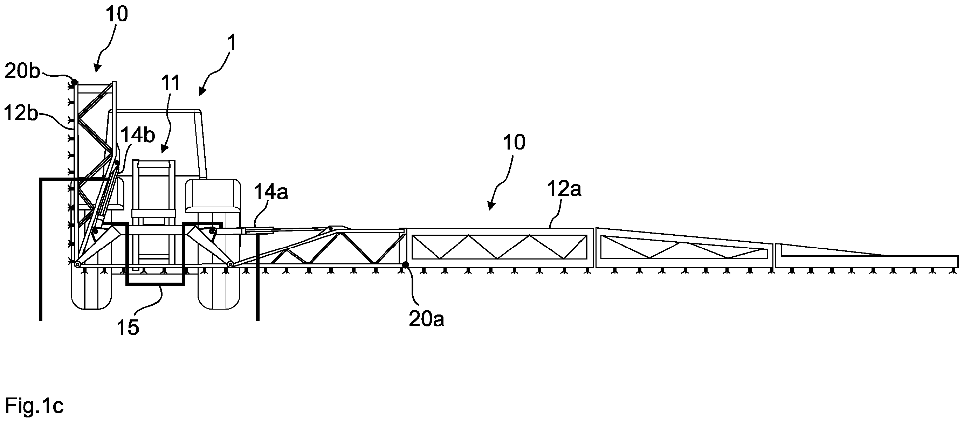

Es ist weiterhin zu sehen, dass die Ausleger 12 a,b jeweils mehrere Gestängeabschnitte aufweisen, die über klappbare Gelenke miteinander verbunden sind. Die einzelnen Gestängeabschnitte können dabei um eine vertikale Achse verklappt werden, so dass die Arbeitsbreite des landwirtschaftlichen Geräts angepasst werden kann. Die Gestängeabsschnitte können dabei für den jeweiligen Ausleger 12 a,b unabhängig verklappt werden. Figur 1a zeigt einen Zustand, in dem die Ausleger 12 a,b vollständig ausgeklappt sind. Figur 1b zeigt einen Zustand, in dem jeweils nur innerste Gestängeabschnitt der Ausleger 12 a,b ausgeklappt ist, während die restlichen Gestängeabschnitte eingeklappt sind. Figur 1c zeigt einen Zustand, in dem alle Gestängeabschnitte des Auslegers 12 b ausgeklappt sind, während nur der innerste Gestängeabschnitt des Auslegers 12 a ausgeklappt ist.

Das landwirtschaftliche Gerät 1 umfasst weiterhin für jeden der Ausleger 12 a,b wenigstens eine Sensorvorrichtung 20 a,b. Die Sensorvorrichtung 20 a,b kann dabei einen oder mehrere Sensoren umfassen. Insbesondere umfasst die Sensorvorrichtung 20 a,b Sensoren zur Messung der auf den Ausleger 12 a,b wirkenden Vertikalbeschleunigung. Sie kann weiterhin Sensoren zur Messung eines Abstandes des Auslegers 12 a,b vom Boden und/oder Sensoren zur Bestimmung einer Winkeldrehrate des Auslegers 12 a,b und/oder Sensoren zur Bestimmung des Klappzustandes der Gestängeabschnitte des Auslegers 12 a,b umfassen. Dabei ist zu beachten, dass die Sensoren nicht alle an derselben Stelle angebracht sein müssen. In Figur 1 ist ein Sensor 20 a,b angedeutet, der sich in etwa in der Mitte des ausgeklappten Auslegers 12 a,b befindet. Diese Position ist beispielsweise dazu geeignet, die tatsächliche auf den Ausleger 12 a,b wirkende Vertikalbeschleunigung zu messen.

Die Stellvorrichtungen 14 a,b sind durch eine hydraulische Verbindungsleitung 15 verbunden. Es ist zu sehen, dass die Verbindungsleitung 15 in der dargestellten Ausführungsform die jeweiligen kolbenseitigen Kammern der Hydraulikzylinder 14 a,b miteinander verbindet.

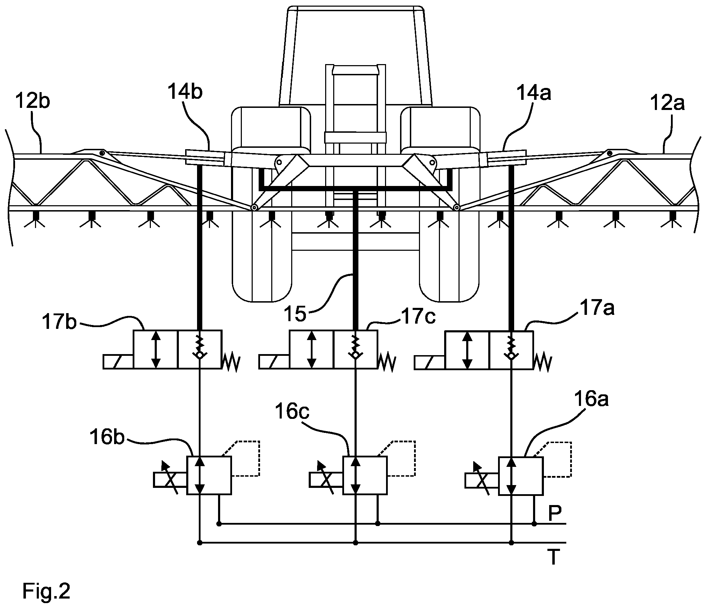

Figur 2 zeigt einen Detailausschnitt der in Figur 1 gezeigten Feldspritze. Zudem sind schematisch die hydraulischen Verbindungen und Schaltelemente dargestellt. Es ist zu sehen, dass jede der Stellvorrichtungen 14 a,b mit einem Druckregelventil 16 a,b verbunden ist. In dem gezeigten Beispiel sind die Druckregelventile 16 a,b mit den stangenseitigen Kammern der Hydraulikzylinder 14 a,b verbunden. Die Verbindungsleitung 15 ist ebenfalls mit einem Druckregelventil 16 c verbunden. Die Druckregelventile 16 a,b,c sind mit den hydraulischen Leitungen P und T eines hydraulischen Kreislaufs verbunden. Hierbei bezeichnet T die Leitung zu einem hydraulischen Tank und P die Leitung zu einer hydraulischen Pumpe.

Zwischen den Druckregelventilen 16 a,b und den Hydraulikzylindern 14 a,b, sowie zwischen dem Druckregelventil 16 c ist jeweils ein Sperrventil 17 a,b,c angebracht. Die Druckregelventile 16 a,b,c sowie die Sperrventile 17 a,b,c werden über die Regeleinheit 2 (nicht gezeigt) gesteuert. Dabei können die jeweiligen Ventile jeweils individuell gesteuert werden.

Die Verriegelung eines der Sperrventile 17 a,b,c führt dazu, dass keine hydraulische Flüssigkeit aus Richtung der Hydraulikzylinder 14 a,b oder der Verbindungsleitung 15 in Richtung Tank abfließen kann. Damit kann sich der entsprechende Hydraulikzylinder 14 a,b nicht in der entsprechenden Richtung verschieben. Der entsprechende Ausleger 12 a,b ist damit in dieser Richtung verriegelt. Ist beispielsweise das Sperrventil 17 a verriegelt, so kann der Hydraulikzylinder 14 a nicht ausgefahren werden.

Es ist zu beachten, dass bei aktiver Neigungsregelung aufgrund Messdaten der Sensorvorrichtung 20 a,b im Allgemeinen die Sperrventile 17 a,b,c offen sind, um eine möglichst schnelle Regelung zu erzielen.

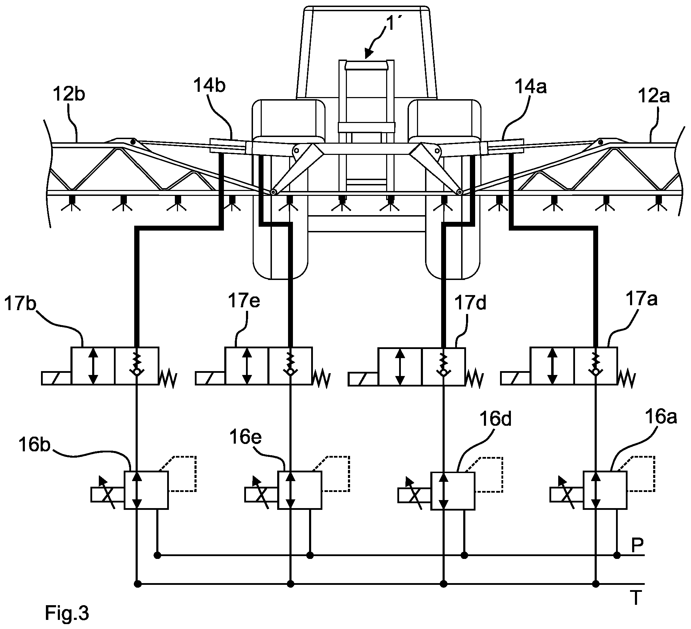

Figur 3 zeigt eine alternative Ausführungsform eines landwirtschaftlichen Geräts 1'. Wie auch die mit Bezug auf Figur 2 beschriebene Ausführungsform, besitzt die hier gezeigte Ausführungsform zwei Stelleinrichtungen 14 a,b, die als doppeltwirkende Hydraulikzylinder ausgebildet sind. Den stangenseiteigen Kammern sind wiederum Druckregelventile 16 a,b und Sperrventile 17 a,b zugeordnet. Anstelle einer hydraulischen Verbindungsleitung weist diese Ausführungsform jedoch jeweils zwei weitere Druckregelventile 16 d,e und Sperrventile 17 d,e auf. Die jeweiligen Ventile können wiederum individuell über eine Regeleinheit 2 gesteuert werden.

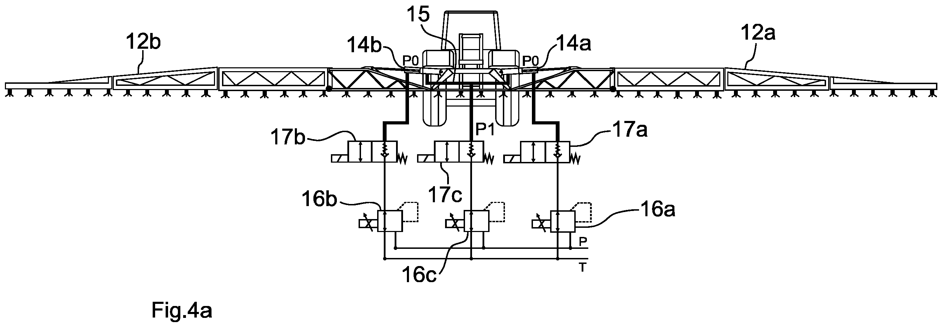

Figuren 4a bis 4c zeigen die Zustände der Ausleger 12 a,b des Verteilergestänges 10 mit den zugehörigen Stellzuständen der Druckregelventile 16 a,b,c und Sperrventilen 17 a,b,c in verschiedenen Phasen eines Klappvorganges, hier dem gemeinsamen Anwinkeln der beiden Ausleger 12 a,b.

In Figur 4a sind die Sperrventile 17 a,b,c verriegelt. In den beiden stangenseitigen Kammern der jeweiligen Hydraulikzylinder 14 a,b herrscht ein Druck p0 a,b. In der Verbindungsleitung 15, und damit in den beiden kolbenseitigen Kammern der Hydraulikzylinder 14 a,b, herrscht ebenfalls ein Druck p1. In der dargestellten Situation sind die Ausleger 12 a,b symmetrisch ausgeklappt. Daher sind die Drücke p0 a,b in den stangenseitigen Kammern der Hydraulikzylinder 14 a,b identisch. Mit anderen Worten herrscht an beiden Hydraulikzylindern 14 a,b dieselbe Druckdifferenz zwischen der jeweiligen kolbenseitigen und der jeweiligen stangenseitigen Kammer. Im Falle einer asymmetrischen Anwinkelung, oder für den Fall, dass einer der Ausleger 12 a,b nicht vollständig ausgeklappt ist, können die erwähnten Druckdifferenzen für die Hydraulikzylinder 14 a,b unterschiedlich sein.

Wird eines oder mehrere der Sperrventile 17 a,b,c geöffnet, so steuert die Regeleinheit 2 das entsprechende Druckregelventil 16 a,b,c dergestalt an, dass ein jeweiliger Soll-Druck in den entsprechenden Zylinderkammern bzw. der hydraulischen Verbindungsleitung herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

Hierbei ist zu bemerken, dass bei der Berechnung eines einzustellenden Soll-Drucks die Ring- und Kolbenflächen des Hydraulikzylinders berücksichtigt werden können. Denn die Hydraulikzylinder 14 a,b weisen an den zwei Seiten des Kolbens zwei verschieden große Wirkflächen auf. Die der Kolbenstange zugewandte Wirkfläche des Hydraulikzylinders ist hierbei kleiner als die der Kolbenstange abgewandten Wirkfläche. Demnach herrscht bei Kräftegleichgewicht an der Ringfläche ein unterschiedlicher, insbesondere größerer, Druck als an der Kolbenfläche.

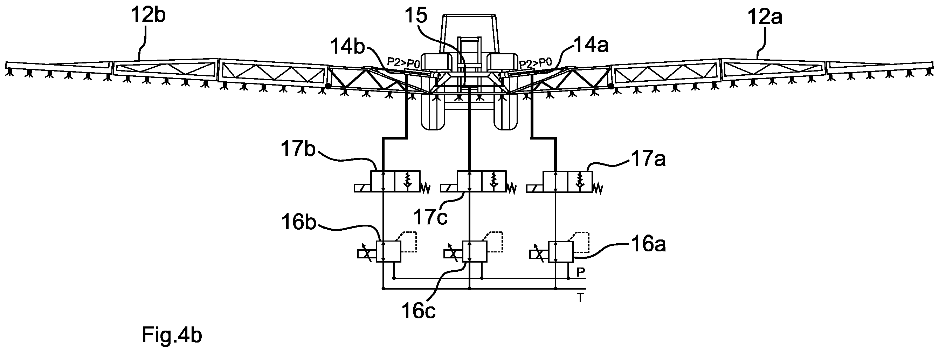

Figur 4b zeigt den Zustand während des Anwinkelns. Es ist zu sehen, dass die Sperrventile 17 a,b,c geöffnet sind. Wie oben beschrieben, hat die Regeleinheit 2 beim Öffnen der Sperrventile einen jeweiligen Soll-Druck in den Zylinderkammern eingestellt. Darauf folgend wird mittels der Druckregelventile 16 a,b der Druck in den stangenseitigen Kammern der Hydraulikzylinder 14 a,b gleichermaßen auf den Druck p2 erhöht. Der Druck p2 kann insbesondere einem Soll-Druck für einen gewünschten Klappzustand entsprechen. Durch die Erhöhung des Drucks in den stangenseitigen Kammern der Hydraulikzylinder 14 a,b wirkt jeweils eine Kraft auf die Ringflächen der Kolben der Hydraulikzylinder 14 a,b. Da das Sperrventil 17 c geöffnet ist, kann hydraulische Flüssigkeit aus der Verbindungsleitung 15 in Richtung Tank T abfließen, und der Kolben der Hydraulikzylinder 14 a,b verschiebt sich in Richtung des Mittelteils 11. Dies resultiert in einem synchronen Anwinkeln beider Ausleger 12 a,b.

Alternativ, hier nicht gezeigt, ist es auch möglich, während des eben beschriebenen Vorgangs lediglich das Sperrventil 17c zu öffnen, da die Sperrventile 17 a,b das Abfließen der hydraulischen Flüssigkeiten aus den stangenseitigen Kammern der Hydraulikzylinder 14 a,b verhindern. Im vorliegenden Fall ist der dort eingestellte Druck p2 höher ist als der Ausgangswert p0 a,b. Die auf die Kolben der Hydraulikzylinder 14 a,b wirkende Kraft wird also immer auf eine Verschiebung des jeweiligen Kolbens Richtung Mittelteil 11 hinwirken. Da das Sperrventil 17 c geöffnet ist, kann hydraulische Flüssigkeit aus der Verbindungsleitung 15 in Richtung Tank T abfließen, und der jeweilige Kolben kann sich entsprechend bewegen, wie weiter oben beschrieben.

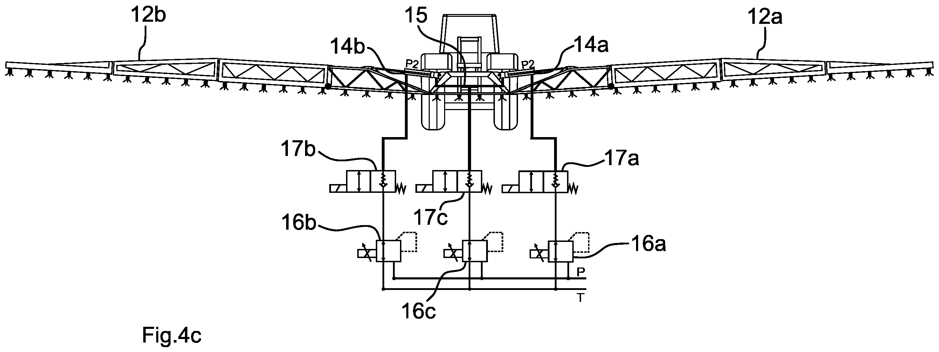

Figur 4c zeigt den Zustand nachdem das Anwinkeln abgeschlossen ist. Es ist zu sehen, dass alle Sperrventile 17 a,b,c wieder geschlossen sind. In den stangenseitigen Kammern der Hydraulikzylinder 14 a,b herrscht der Druck p2. In der Verbindungsleitung 15, und damit in den kolbenseitigen Kammern der Hydraulikzylinder 14 a,b herrscht ein Druck p3. Der Druck p3 wird im Allgemeinen gleich dem zuvor herrschenden Druck p1 sein. Er kann aber auch unterschiedlich sein. Die beiden Ausleger 12 a,b wurden gleichermaßen angewinkelt.

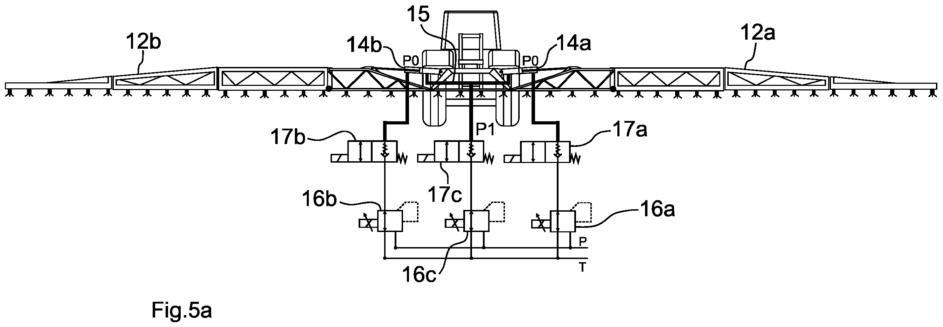

Figuren 5a bis 5c zeigen die Zustände der Ausleger 12 a,b des Verteilergestänges 10 mit den zugehörigen Stellzuständen der Druckregelventile 16 a,b,c und Sperrventilen 17 a,b,c in verschiedenen Phasen eines Klappvorganges, hier dem einseitigen Anwinkeln des Auslegers 12 a.

In Figur 5a sind die Sperrventile 17 a,b,c verriegelt. In den beiden stangenseitigen Kammern der jeweiligen Hydraulikzylinder 14 a,b herrscht ein Druck p0 a,b. In der Verbindungsleitung 15, und damit in den beiden kolbenseitigen Kammern der Hydraulikzylinder 14 a,b, herrscht ein Druck p1. In der dargestellten Situation sind die Ausleger 12 a,b symmetrisch ausgeklappt. Daher sind die Drücke p0 a,b in den stangenseitigen Kammern der Hydraulikzylinder 14 a,b identisch. Mit anderen Worten herrscht an beiden Hydraulikzylindern 14 a,b dieselbe Druckdifferenz p0 - p1 zwischen der jeweiligen kolbenseitigen und der jeweiligen stangenseitigen Kammer. Im Falle einer asymmetrischen Anwinkelung, oder für den Fall, dass einer der Ausleger 12 a,b nicht vollständig ausgeklappt ist, können die erwähnten Druckdifferenzen für die Hydraulikzylinder 14 a,b unterschiedlich sein.

Wird eines oder mehrere der Sperrventile 17 a,b,c geöffnet, so steuert die Regeleinheit 2 das entsprechende Druckregelventil 16 a,b,c dergestalt an, dass ein jeweiliger Soll-Druck in den entsprechenden Zylinderkammern bzw. der hydraulischen Verbindungsleitung herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

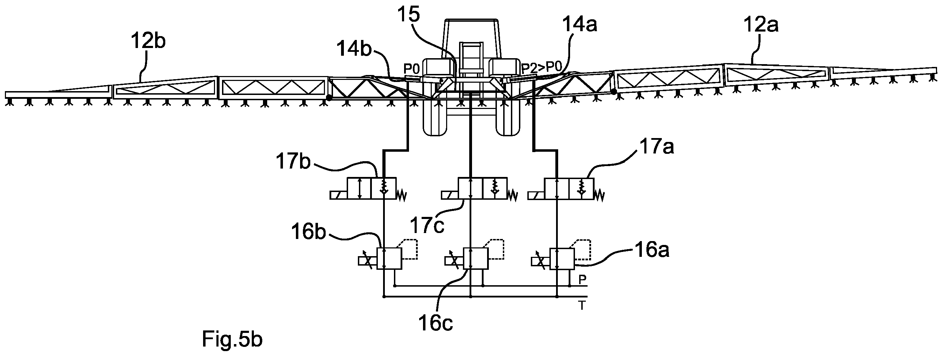

Figur 5b zeigt den Zustand während des Anwinkelns des Auslegers 12 a. Es ist zu sehen, dass das die Sperrventile 17 a und 17 c geöffnet worden ist, das Sperrventil 17 b jedoch weiterhin geschlossen ist. Wie oben beschrieben, hat die Regeleinheit 2 beim Öffnen der Sperrventile einen jeweiligen Soll-Druck in den Zylinderkammern eingestellt. Darauf folgend wird mittels des Druckregelventils 16 a der Druck in der stangenseitigen Kammer des Hydraulikzylinders 14 a auf den Druck p2 erhöht. Der Druck p2 kann beispielsweise einem gewünschten Klappzustand des Auslegers 12 a entsprechen. Dadurch wirkt eine Kraft auf die Ringfläche des Kolbens des Hydraulikzylinders 14 a. Da das Sperrventil 17 c geöffnet ist, kann hydraulische Flüssigkeit aus der Verbindungsleitung 15 in Richtung Tank T abfließen, und der Kolben der Hydraulikzylinder 14 a verschiebt sich in Richtung des Mittelteils 11. Dies resultiert in einem Anwinkeln des Auslegers 12 a. Demgegenüber bleibt der Druck in der stangenseitigen Kammer des Hydraulikzylinders 14 b unverändert. Da das Sperrventil 17 b geschlossen ist und das Sperrventil 17 c geöffnet ist, findet keine Bewegung des Kolbens des Hydraulikzylinders 14 b statt. Der Ausleger 12 b verbleibt daher in seiner Lage.

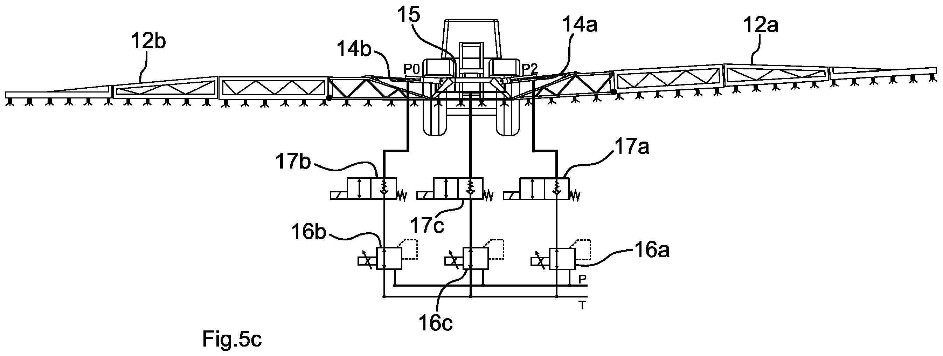

Figur 5c zeigt den Zustand nachdem das Anwinkeln des Auslegers 12 a abgeschlossen ist. Es ist zu sehen, dass alle Sperrventile 17 a,b,c wieder geschlossen sind. In der stangenseitigen Kammer des Hydraulikzylinders 14 a herrscht der eingestellte Druck p2, in der des Hydraulikzylinders 14 b der Druck p0. In der Verbindungsleitung 15, und damit in den kolbenseitigen Kammern der Hydraulikzylinder 14 a,b herrscht ein Druck p3. Der Druck p3 wird im Allgemeinen gleich dem zuvor herrschenden Druck p1 sein. Er kann aber auch unterschiedlich sein.

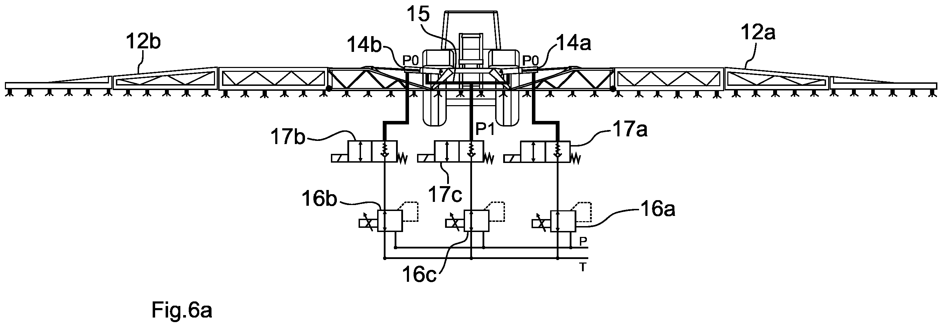

Figuren 6a bis 6c zeigen die Zustände der Ausleger 12 a,b des Verteilergestänges 10 mit den zugehörigen Stellzuständen der Druckregelventile 16 a,b,c und Sperrventilen 17 a,b,c in verschiedenen Phasen eines Klappvorganges, hier dem gemeinsamen Verkippen der Ausleger 12 a,b.

In Figur 6a sind die Sperrventile 17 a,b,c verriegelt. In den beiden stangenseitigen Kammern der jeweiligen Hydraulikzylinder 14 a,b herrscht ein Druck p0 a,b. In der Verbindungsleitung 15, und damit in den beiden kolbenseitigen Kammern der Hydraulikzylinder 14 a,b, herrscht ein voreingestellter Druck p1. In der dargestellten Situation sind die Ausleger 12 a,b symmetrisch ausgeklappt. Daher sind die Drücke p0 a,b in den stangenseitigen Kammern der Hydraulikzylinder 14 a,b identisch. Mit anderen Worten herrscht an beiden Hydraulikzylindern 14 a,b dieselbe Druckdifferenz p0 - p1 zwischen der jeweiligen kolbenseitigen und der jeweiligen stangenseitigen Kammer. Im Falle einer asymmetrischen Anwinkelung, oder für den Fall, dass einer der Ausleger 12 a,b nicht vollständig ausgeklappt ist, können die erwähnten Druckdifferenzen für die Hydraulikzylinder 14 a,b unterschiedlich sein.

Wird eines oder mehrere der Sperrventile 17 a,b,c geöffnet, so steuert die Regeleinheit 2 das entsprechende Druckregelventil 16 a,b,c dergestalt an, dass ein jeweiliger Soll-Druck in den entsprechenden Zylinderkammern bzw. der hydraulischen Verbindungsleitung herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

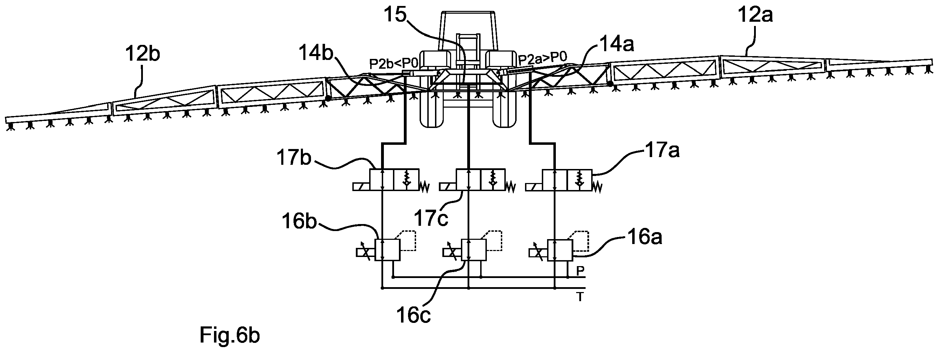

Figur 6b zeigt den Zustand während des Verkippens. Es ist zu sehen, dass das der Verbindungsleitung 15 zugeordnete Sperrventil 17 c weiterhin verriegelt ist, während das Sperrventil 17 a und das Sperrventil 17 b geöffnet sind. Wie oben beschrieben, hat die Regeleinheit 2 beim Öffnen der Sperrventile einen jeweiligen Soll-Druck in den Zylinderkammern eingestellt. Darauf folgend wird mittels des Druckregelventils 16 a der Druck in der stangenseitigen Kammer des Hydraulikzylinders 14 a auf den Druck p2 a erhöht, während der Druck in der stangenseitigen Kammer des Hydraulikzylinders 14 b mittels des Druckregelventils 16 b auf den Druck p2 b abgesenkt wird. Dabei entspricht der Druck p2 a einem voreingestellten Druck für einen Klappzustand, bei dem der Ausleger 12 a gegenüber der in Figur 6a dargestellten Ausgangslage um einen Winkel alpha angewinkelt ist. Der Druck p2 b entspricht einem voreingestellten Druck für einen Klappzustand, bei dem der Ausleger 12 b gegenüber der in Figur 6a dargestellten Ausgangslage um einen Winkel alpha abgewinkelt ist. Durch die Erhöhung des Drucks in der stangenseitigen Kammer des Hydraulikzylinders 14 a wirkt eine Kraft auf die Ringfläche des Kolbens des Hydraulikzylinders 14 a. Diese Kraft wird über die Verbindungsleitung auf die kolbenseitige Kammer des Hydraulikzylinders 14 b übertragen, da das Sperrventil 17 c geschlossen ist. Da gleichzeitig der Druck in der stangenseitigen Kammer des Hydraulikzylinders 14 b gesenkt wird, bewegen sich die beiden Kolben der Hydraulikzylinder 14 a,b in dieselbe Richtung (in der Figur nach links). Dies führt zu einem Anwinkeln des Auslegers 12 a und zu einem gleichzeitigen Abwinkeln des Auslegers 12 b.

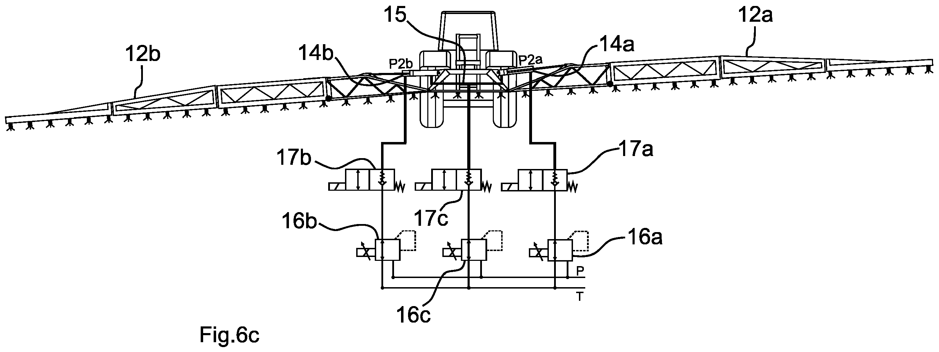

Figur 6c zeigt den Zustand nachdem das Verkippen des Verteilergestänges abgeschlossen ist. Es ist zu sehen, dass alle Sperrventile 17 a,b,c wieder geschlossen sind. In den stangenseitigen Kammern der Hydraulikzylinders 14 a,b herrschen die eingestellten Druckwerte p2 a,b. In der Verbindungsleitung 15, und damit in den kolbenseitigen Kammern der Hydraulikzylinder 14 a,b herrscht ein Druck p3. Der Druck p3 wird im Allgemeinen gleich dem zuvor herrschenden Druck p1 sein. Er kann aber auch unterschiedlich sein.

Es versteht sich, dass eine Kontrolle der Ausleger 12 a,b wie sie mit Bezug auf die Figuren 4a-c, 5a-c und 6a-c beschrieben worden ist, auch mit einem landwirtschaftlichen Gerät wie in Figur 3 dargestellt möglich ist. In diesem Fall tritt an die Stelle des Öffnens und Verriegeln des Sperrventils 17 c in der Verbindungsleitung 15 eine Ansteuerung der Druckregelventile 16 d,e und Sperrventile 17 d,e zur Kontrolle des Drucks in den kolbenseitigen Kammern der Hydraulikzylinder 14 a,b.

So würden in einer der Figur 4b entsprechenden Situation die Sperrventile 17 d,e geöffnet. Die Einstellung des Drucks in den stangenseitigen Kammern der Hydraulikventile 14 a,b würde hingegen genauso wie mit Bezug auf Figur 4b beschrieben geschehen. Dann würde aus den stangenseitigen Kammern der Hydraulikventile 14 a,b hydraulische Flüssigkeit in Richtung Tank T abfließen, und es würde sich, wie oben beschrieben, ein gemeinsames Anwinkeln der Ausleger 12 a,b ergeben. Entsprechendes gilt für die in Figuren 5b und 6b gezeigten Situationen.

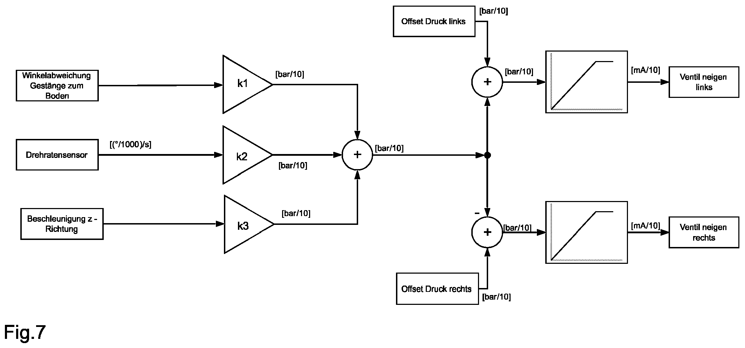

Figur 7 zeigt schematisch einen beispielhaften Regelkreislauf, mit dem die Lage eines der Ausleger 12 a,b kontrolliert werden kann. Es ist zu sehen, dass verschiedene Messdaten als Eingangswerte für die Regelung dienen. Die Messdaten werden beispielsweise mittels der Sensorvorrichtung 20 a,b erfasst.

Im gezeigten Fall beinhalten die Eingangswerte den Abstand des Auslegers 12 a,b vom Boden, die Drehrate des Auslegers 12 a,b, sowie die Vertikalbeschleunigung des Auslegers 12 a,b. Es ist zu verstehen, dass diese Beispiele keine ausschließliche Liste darstellen. Weiterhin müssen nicht alle gezeigten Messwerte als Eingangswerte verwendet werden.

Aus den einzelnen Messwerten wird unter Verwendung jeweiliger Regelparameter k1, k2, k3 ein gemeinsamer Regelwert bestimmt. Dabei ist zu beachten, dass die Werte k1, k2, k3 einfache Proportional-Faktoren sein können. Sie können aber auch die Form einer PID-Regelung haben. So ist es beispielsweise möglich, dass der mit "k1" bezeichnete Teil des Kreislaufs einer PID-Regelung mit der gemessenen Winkelabweichung als Eingangswert und einer vorbestimmten Winkelabweichung als Sollwert entspricht. Selbiges gilt für die anderen gezeigten Eingangswerte. Insbesondere kann der Teil, der sich auf die Vertikalbeschleunigung bezieht, eine PID-Regelung mit der gemessenen Vertikalbeschleunigung als Eingangswert und entweder 0 m/s² oder 9,81 m/s² als Sollwert besitzen.

Generell ist zu sagen, dass die Ausgangswerte der Teile k1, k2, k3 jeweils so geartet sind, dass sie den Ausleger 12 a,b von einem gemessenen Ist-Wert des entsprechenden Messwerts in einen gewollten Soll-Wert des entsprechenden Messwerts überführen.

Die Ausgangswerte der Teile k1, k2, k3 werden anschließend, beispielsweise additiv, kombiniert. Dies geschieht, um die Gesamtbewegung des Auslegers 12 a,b korrekt zu erfassen. So können beim Überfahren einer Bodenunebenheit beispielsweise der Ast k1 und der Ast k2 entgegengesetzte Signale ausgeben: Der Abstand des Auslegers 12 a,b zum Boden wird durch das Überfahren verringert, daher wird der entsprechende Ast k1 auf ein Anheben des Auslegers hin regeln. Gleichzeitig wirkt aber eine positive, also vom Boden Weg wirkende, Vertikalbeschleunigung auf den Ausleger 12 a,b. Der Ast k3 wird dementsprechend auf ein Absenken des Auslegers hin regeln. Durch das Kombinieren der Ausgangssignale können beide Komponenten berücksichtig werden, und es erfolgt keine entgegengesetzte Regelung, wie es bei zwei unabhängigen Regelsystemen auftreten könnte.

Wenn sich der Ausleger in Soll- oder Ruhelage befindet, ist das kombinierte Signal gleich 0, d.h., es wird kein Einfluss auf die Stellung des Auslegers 12 a,b genommen.

Das kombinierte Ausgangssignal wird dann jeweils mit einem Druckoffset kombiniert, der in Ruhelage an den beiden Seiten des Hydraulikzylinder 14 a,b herrscht. Der Druckoffset berücksichtigt dabei sowohl externe Kräfte, die in Solllage an dem Ausleger 12 a,b anliegen, als auch die unterschiedlichen Wirkflächen der beiden Koblenseiten. Solche Kräfte können beispielsweise auftreten, wenn das Gestänge nicht vollständig symmetrisch ausgeklappt ist. Sie können auch bei Hang- oder Kurvenfahrten auftreten. Dabei kann der Druckoffset individuell für die jeweiligen Hydraulikzylinder 14 a,b variieren. Der Druckoffset soll damit die tatsächlich an dem Verteilergestänge 10 in normalem Arbeitsbetrieb anliegenden Kräfte berücksichtigen. Abschließend wird jeweils ein Steuerungssignal für die Druckregelventile 16 a,b,c generiert, um Druckwerte für die Kammern der Stellvorrichtung 14 a,b zu generieren. Es ist möglich, wie in der Figur angedeutet, dass das Steuerungssignal auf einen maximalen Wert beschränkt wird. Damit können beispielsweise die auf das Verteilergestänge 10 während der Steuerung wirkenden Kräfte beschränkt werden.

Zusammenfassend sorgt also der gezeigte Regelkreis also dafür, dass der Ausleger 12 a,b in einer Soll-Lage gehalten wird, beziehungsweise möglichst wenig aus der Soll-Lage ausgelenkt wird.

Die beschriebene Regelsteuerung kann beispielsweise in der Regeleinheit 2 implementiert sein. Es ist zu beachten, dass im Allgemeinen bei Betrieb der beschriebenen Regelsteuerung die Sperrventile 17 a,b,c geöffnet sind, um eine schnelle Drucksteuerung in den Kammern der Hydraulikzylinder 14 a,b sowie der Verbindungsleitung 15 zu erreichen. Analoges gilt für die mit Bezug auf Figur beschriebene Ausführungsform des Geräts 1'. Die Sperrventile 17 a,b,c dienen im Allgemeinen dazu, die Positionen der Kolben der Hydraulikzylinder 14 a,b, und damit die Position des Auslegers, bei ausgeschalteter Regelung zu fixieren.

Es versteht sich, dass in den Figuren gezeigte Geometrien nur beispielhaft sind und auch in beliebigen anderen Ausgestaltungen möglich sind.

## Patentansprüche

1. Landwirtschaftliches Gerät (1) zum Ausbringen von Material, wie Düngemittel, Pflanzenschutzmittel oder Saatgut, **gekennzeichnet durch**
ein beidseitig klappbares Verteilergestänge (10) mit einem Mittelteil (11) und zwei mit dem Mittelteil (11) durch Gelenke verbundenen seitlichen Auslegern (12 a,b);
eine erste hydraulische Stellvorrichtung (14 a), um einen der Ausleger (12 a) um eine erste in Fahrtrichtung des landwirtschaftlichen Geräts (1) weisende Drehachse zu bewegen;
eine zweite hydraulische Stellvorrichtung (14 b), um den anderen Ausleger (12 b) um eine zweite in Fahrtrichtung des landwirtschaftlichen Geräts (1) weisende Drehachse zu bewegen;
eine hydraulische Verbindungsleitung (15), die die erste Stellvorrichtung (14 a) und die zweite Stellvorrichtung (14 b) hydraulisch verbindet; und
eine Regeleinheit (2);
wobei jeweils ein Druckregelventil (16 a,b,c) der ersten Stellvorrichtung (14 a), der zweiten Stellvorrichtung (14 b) und der Verbindungsleitung (15) zugeordnet ist; und
wobei die Druckregelventile (16 a,b,c) von der Regeleinheit (2) ansteuerbar sind.

2. Landwirtschaftliches Gerät gemäß Anspruch 1, wobei der ersten Stellvorrichtung (14 a), der zweiten Stellvorrichtung (14 b) und der Verbindungsleitung (15) jeweils ein dem jeweiligen Druckregelventil (16 a,b,c) zugeordnetes Sperrventil (17 a,b,c) zugeordnet ist.

3. Landwirtschaftliches Gerät gemäß Anspruch 1 oder 2, weiterhin umfassend eine einem Ausleger (12 a,b) zugeordnete Sensorvorrichtung (20 a,b) zum Erfassen einer auf den jeweiligen Ausleger (12 a,b) wirkenden Vertikalbeschleunigung des jeweiligen Auslegers (12 a,b) .

4. Landwirtschaftliches Gerät gemäß Anspruch 3, wobei die Sensorvorrichtung (20 a,b) mit einem vorherbestimmten Abstand, insbesondere mit einem Abstand zwischen 1 m und 3 m, zu der jeweiligen Drehachse befestigt ist.

5. Landwirtschaftliches Gerät gemäß einem der Ansprüche 3 oder 4, wobei die Regeleinheit (2) dazu konfiguriert ist, die Druckregelventile (16 a,b,c) basierend auf Werten der Sensorvorrichtung (20 a,b) anzusteuern.

6. Landwirtschaftliches Gerät gemäß einem der Ansprüche 3 bis 5, wobei die Regeleinheit (2) dazu konfiguriert ist, die Druckregelventile (16 a,b,c), insbesondere mittels eines PID-Reglers, so anzusteuern, dass ein Sollwert der Vertikalbeschleunigung an dem jeweiligen Ausleger (12 a,b) wirkt.

7. Landwirtschaftliches Gerät gemäß einem der vorhergehenden Ansprüche, wobei die erste und die zweite Stellvorrichtung (14 a,b) als doppeltwirkender Hydraulikzylinder ausgebildet sind.

8. Landwirtschaftliches Gerät gemäß Anspruch 7, wobei die Verbindungsleitung (15) die kolbenseitigen Kammern der ersten und der zweiten Stellvorrichtung (14 a,b) verbindet.

9. Landwirtschaftliches Gerät gemäß einem der vorhergehenden Ansprüche, wobei die Druckregelventile (16 a,b,c) unabhängig voneinander ansteuerbar sind.

10. Landwirtschaftliches Gerät gemäß einem der vorhergehenden Ansprüche, wobei die jeweiligen Stellvorrichtungen (14 a,b) dazu geeignet sind, den jeweiligen Ausleger (12 a,b) von einer Transportstellung in eine Arbeitsstellung und umgekehrt zu überführen.

11. Verfahren zur Steuerung eines landwirtschaftlichen Geräts gemäß einem der vorhergehenden Ansprüche, umfassend die Schritte:
Einstellen eines ersten Solldrucks in einer Verbindungsleitung (15), die eine erste Stellvorrichtung (14 a) und eine zweite Stellvorrichtung (14 b) hydraulisch verbindet, mittels des zugeordneten Druckregelventils (16 c);
Einstellen eines zweiten Solldrucks an der ersten Stellvorrichtung (14 a) mittels des zugeordneten Druckregelventils (16 a); und
Einstellen eines dritten Solldrucks an der zweiten Stellvorrichtung (14 b) mittels des zugeordneten Druckregelventils (16 b).

12. Verfahren gemäß Anspruch 11, wobei das der Verbindungsleitung (15) zugeordnete Sperrventil (17 c) nach dem Einstellen des ersten Solldrucks geschlossen wird, und wobei das Einstellen des zweiten Solldrucks eine Erhöhung des Drucks an der ersten Stellvorrichtung (14 a) umfasst, und das Einstellen des dritten Solldrucks eine entsprechende Senkung des Drucks an der zweiten Stellvorrichtung (14 b) umfasst.

13. Verfahren gemäß Anspruch 12, wobei das der Verbindungsleitung (15) zugeordnete Sperrventil (17 c) nach dem Einstellen des ersten Solldrucks geöffnet bleibt.

14. Verfahren gemäß einem der Ansprüche 11 bis 13, weiterhin umfassend die Schritte Erfassen einer Vertikalbeschleunigung eines Auslegers (12 a,b);
Bestimmen einer auf die jeweilige Stelleinrichtung (14 a,b) aufgrund der erfassten Vertikalbeschleunigung wirkenden Kraft;
Bestimmen von angepassten Druckwerten für die jeweilige Stelleinrichtung (14 a,b) und/oder die Verbindungsleitung (15);
Ansteuern der Regelventile (16 a,b,c) zum Einstellen der bestimmten angepassten Druckwerte.

15. Verfahren gemäß Anspruch 14, wobei die angepassten Druckwerte, insbesondere mittels einer PID-Schaltung, so bestimmt werden, dass an dem Ausleger (12 a,b) ein Sollwert der Vertikalbeschleunigung wirkt.

## Claims

1. Agricultural machine (1) for spreading material such as fertilizer, plant protectant or seed, **characterized by**
a distributor boom (10) which can be folded on both sides and has a central part (11) and two lateral arms (12 a,b) connected to the central part (11) by joints;
a first hydraulic actuating device (14 a) for moving one of the arms (12 a) about a first axis of rotation pointing in the direction of travel of the agricultural machine (1);
a second hydraulic actuating device (14 b) for moving the other arm (12 b) about a second axis of rotation pointing in the direction of travel of the agricultural machine (1);
a hydraulic connecting line (15) which hydraulically connects the first actuating device (14 a) and the second actuating device (14 b); and
a control unit (2);
wherein a pressure control valve (16 a,b,c) is associated with the first actuating device (14 a), the second actuating device (14 b) and the connecting line (15) in each case; and
wherein the pressure control valves (16 a,b,c) can be controlled by the control unit (2).

2. Agricultural machine according to claim 1, wherein the first actuating device (14 a), the second actuating device (14 b) and the connecting line (15) are each associated with a shut-off valve (17 a,b,c) associated with the relevant pressure control valve (16 a,b,c).

3. Agricultural machine according to claim 1 or 2, further comprising a sensor device (20 a,b), associated with an arm (12 a,b), for detecting a vertical acceleration of the relevant arm (12 a,b) acting on the relevant arm (12 a,b).

4. Agricultural machine according to claim 3, wherein the sensor device (20 a,b) is attached at a predetermined distance, in particular at a distance of between 1 m and 3 m, with respect to the relevant axis of rotation.

5. Agricultural machine according to any of claims 3 or 4, wherein the control unit (2) is configured to control the pressure control valves (16 a,b,c) on the basis of values from the sensor device (20 a,b).

6. Agricultural machine according to any of claims 3 to 5, wherein the control unit (2) is configured to control the pressure control valves (16 a,b,c), in particular by means of a PID controller, such that a target value of the vertical acceleration acts on the relevant arm (12 a,b).

7. Agricultural machine according to any of the preceding claims, wherein the first and the second actuating device (14 a,b) are designed as double-acting hydraulic cylinders.

8. Agricultural machine according to claim 7, wherein the connecting line (15) connects the piston-side chambers of the first and the second actuating device (14 a, b).

9. Agricultural machine according to any of the preceding claims, wherein the pressure control valves (16 a,b,c) can be controlled independently of one another.

10. Agricultural machine according to any of the preceding claims, wherein the respective actuating devices (14 a,b) are suitable for transferring the relevant arm (12 a,b) from a transport position to a work position and vice versa.

11. Method for controlling an agricultural machine according to any of the preceding claims, comprising the steps of:
Setting a first target pressure in a connecting line (15), which hydraulically connects a first actuating device (14 a) and a second actuating device (14 b), by means of the associated pressure control valve (16 c);
Setting a second target pressure at the first actuating device (14 a) by means of the associated pressure control valve (16 a); and
Setting a third target pressure at the second actuating device (14 b) by means of the associated pressure control valve (16 b).

12. Method according to claim 11, wherein the shut-off valve (17 c) associated with the connecting line (15) is closed after setting the first target pressure, and wherein setting the second target pressure comprises increasing the pressure at the first actuating device (14 a), and setting the third target pressure comprises a corresponding reduction in the pressure at the second actuating device (14 b).

13. Method according to claim 12, wherein the shut-off valve (17 c) associated with the connecting line (15) remains open after setting the first target pressure.

14. Method according to any of claims 11 to 13, further comprising the steps of
Detecting a vertical acceleration of an arm (12 a,b);
Determining a force acting on the relevant actuating device (14 a,b) on the basis of the detected vertical acceleration;
Determining adjusted pressure values for the relevant actuating device (14 a,b) and/or the connecting line (15);
Controlling the control valves (16 a,b,c) in order to set the specific adjusted pressure values.

15. Method according to claim 14, wherein the adjusted pressure values are determined, in particular by means of a PID circuit, such that a target value of the vertical acceleration acts on the arm (12 a,b).

## Revendications

1. Appareil agricole (1) pour l'épandage de matériau, tel que de l'engrais, des agents phytosanitaires ou des semences, **caractérisé par**
une rampe de distribution (10) repliable des deux côtés et comportant une partie centrale (11) et deux bras (12 a, b) latéraux reliés à la partie centrale (11) par des articulations ;
un premier dispositif de réglage (14 a) hydraulique pour déplacer l'un des bras (12 a) autour d'un premier axe de rotation orienté dans un sens de déplacement de l'appareil agricole (1) ;
un second dispositif de réglage (14 b) hydraulique pour déplacer l'autre bras (12 b) autour d'un second axe de rotation orienté dans le sens de déplacement de l'appareil agricole (1) ;
une conduite de liaison (15) hydraulique qui relie hydrauliquement le premier dispositif de réglage (14 a) et le second dispositif de réglage (14 b) ; et
une unité de régulation (2) ;
dans lequel respectivement une soupape de régulation de pression (16 a, b, c) est associée au premier dispositif de réglage (14 a), au second dispositif de réglage (14 b) et à la conduite de liaison (15) ; et
dans lequel les soupapes de régulation de pression (16 a, b, c) peuvent être commandées par l'unité de régulation (2).

2. Appareil agricole selon la revendication 1, dans lequel respectivement une soupape d'arrêt (17 a, b, c) associée à la soupape de régulation de pression (16 a, b, c) respective est associée au premier dispositif de réglage (14 a), au second dispositif de réglage (14 b) et à la conduite de liaison (15).

3. Appareil agricole selon la revendication 1 ou 2, comprenant en outre un dispositif formant capteur (20 a, b) associé à un bras (12 a, b) pour détecter une accélération verticale du bras (12 a, b) respectif, laquelle accélération verticale agit sur le bras (12 a, b) respectif.

4. Appareil agricole selon la revendication 3, dans lequel le dispositif formant capteur (20 a, b) est fixé à une distance prédéterminée, en particulier à une distance comprise entre 1 m et 3 m, de l'axe de rotation respectif.

5. Appareil agricole selon l'une des revendications 3 ou 4, dans lequel l'unité de régulation (2) est configurée pour commander les soupapes de régulation de pression (16 a, b, c) sur la base de valeurs du dispositif formant capteur (20 a, b).

6. Appareil agricole selon l'une des revendications 3 à 5, dans lequel l'unité de régulation (2) est configurée pour commander les soupapes de régulation de pression (16 a, b, c), en particulier au moyen d'un régulateur PID, de sorte qu'une valeur de consigne de l'accélération verticale agit sur le bras (12 a, b) respectif.

7. Appareil agricole selon l'une des revendications précédentes, dans lequel le premier et le second dispositif de réglage (14 a, b) sont des vérins hydrauliques double effet.

8. Appareil agricole selon la revendication 7, dans lequel la conduite de liaison (15) relie les chambres côté piston du premier et du second dispositif de réglage (14 a, b).

9. Appareil agricole selon l'une des revendications précédentes, dans lequel les soupapes de régulation de pression (16 a, b, c) peuvent être commandées indépendamment les unes des autres.

10. Appareil agricole selon l'une des revendications précédentes, dans lequel les dispositifs de réglage (14 a, b) respectifs sont aptes à faire passer le bras (12 a, b) respectif d'une position de transport à une position de travail et inversement.

11. Procédé permettant la commande d'un appareil agricole selon l'une des revendications précédentes, comprenant les étapes consistant à :
régler une première pression de consigne dans une conduite de liaison (15), laquelle relie hydrauliquement un premier dispositif de réglage (14 a) et un second dispositif de réglage (14 b), au moyen de la soupape de régulation de pression (16 c) associée ;
régler une deuxième pression de consigne au niveau du premier dispositif de réglage (14 a) au moyen de la soupape de régulation de pression (16 a) associée ; et
régler une troisième pression de consigne au niveau du second dispositif de réglage (14 b) au moyen de la soupape de régulation de pression (16 b) associée.

12. Procédé selon la revendication 11, dans lequel la soupape d'arrêt (17 c) associée à la conduite de liaison (15) est fermée après le réglage de la première pression de consigne, et dans lequel le réglage de la deuxième pression de consigne comprend une augmentation de la pression au niveau du premier dispositif de réglage (14 a), et le réglage de la troisième pression de consigne comprend une diminution correspondante de la pression au niveau du second dispositif de réglage (14 b).

13. Procédé selon la revendication 12, dans lequel la soupape d'arrêt (17 c) associée à la conduite de liaison (15) reste ouverte après le réglage de la première pression de consigne.

14. Procédé selon l'une des revendications 11 à 13, comprenant en outre les étapes consistant à
détecter une accélération verticale d'un bras (12 a, b) ;
déterminer une force agissant sur le dispositif de réglage (14 a, b) respectif sur la base de l'accélération verticale détectée ;
déterminer des valeurs de pression adaptées pour le dispositif de réglage (14 a, b) respectif et/ou la conduite de liaison (15) ;
commander les soupapes de régulation (16 a, b, c) pour le réglage des valeurs de pression adaptées déterminées.

15. Procédé selon la revendication 14, dans lequel les valeurs de pression adaptées sont déterminées, en particulier au moyen d'un circuit PID, de sorte qu'une valeur de consigne de l'accélération verticale agit sur le bras (12 a, b).
